# EUROPEAN PATENT APPLICATION

(11) **EP 1 293 148 A1**
(43) Date of publication of application: **19.03.2003**
(21) Application number: 02078686.9
(22) Date of filing: 09.09.2002
(51) Int. Cl.: A47B 96/14, F16B 12/50

(54) **Differently shaped, preferably metallic, profiles which may be assembled into various kinds of furniture**

(30) Priority: 18.09.2001 IT PN20010066
(71) Applicant: Canevese, Giuseppe, 33077 Sacile (IT)
(72) Inventor: Canevese, Giuseppe, 33077 Sacile (IT)
(74) Representative: Da Riva, Ermanno

(57) **Abstract**

One or both the ends of equal lengths ( 92 ), obtained by a square shaped piece ( 3 ), can be fixed, in a manner and by means which are well known in the art, to lengths ( 91 ) of " C " shaped pieces ( 1 ) having equal sides.

By using only one length ( 91 ) it is possible to obtain a comblike structure ( 130 ), while by the use of two lengths ( 91 ) it is possible to made an upright ( 90 ) which is formed by a " ladder " type structure. Two lengths ( 101 ) of a shaped piece ( 4 ), which is similar to the shaped piece ( 3 ) except that a corner portion provided with a groove ( 43 ), are connected, in a manner and by means which are well known in the art, to respective lengths ( 102 ) of rectangular shaped pieces ( 5 ) thus forming rectangular frames ( 100 ) which in their turn can be fixed, by means of screws extending through the lengths ( 102 ), to respective lengths ( 92 ) in order to form wall-attached or floor-supported framework structures.

## Description

The present invention relates to shaped pieces preferably of metallic type as well as different shape which may be variously assembled to create various kinds of furniture elements.

Furniture elements which are preferably made of metallic and/or plastic and/or wooden materials and so on are generally well known.

Such furniture elemens , as wardrobes , trolley-tables , writing-tables , shelves, etc. used in the office furniture as well as in other kinds of furniture, as bathrooms furniture, kitchen furniture, dining rooms furniture, etc are made in a manner and by means which are well known in the art.

For example, there are furniture elements made of metallic sheet material which are variously shaped and assembled by means such as spot-welding or the like, or by fixed-joints suitable for connecting modular furniture components.

Such furniture systems are very practical for construction purposes , but they do not facilitate the assembling and/or the transport operations.

For example, furniture elements made by means of shaped and spot welded iron-sheets are taking up much space and moreover they are difficult to move and to transport.

With regard to the furniture elements made of preformed metallic sheets suitable to be secured together by joints, they are easier to move and to transport than the above-mentioned furniture systems but often they require various as well as difficult assembling operations.

There are also furniture elements made of metallic shaped pieces which can be variously assembled in a manner and by means which are well known and commonly used in the manufacturing of the traditional furniture elements.

Usually, such assembling means are joint systems which are constituted , for example, by eccentric cams adapted to rotate in corresponding seats in order to connect said shaped pieces.

This traditional method of assembling is not very economical, as practically admitted by its inventor in a first embodiment of the invention. Furthermore, such methods of assembling require a large variety of different components and do not create furniture elements having the desired rigidity and mechanical strength.

All the above stated methods and also those methods which have been omitted for brevity are, for various reasons, too expensive and therefore not advantageous.

It is a general object of the present invention to overcome the above-described drawbacks in the cited prior art by providing a structure made by a minimal number of pieces that may be shaped so as to be readily and quickly assembled to form furniture elements which are more transportable and economical than the furniture elements resulting from the above mentioned traditional methods.

In order to better understand the features and the advantages attainable by the invention forming the object of the present invention, a preferred embodiment of the invention is hereinafter described, by way of a not limitative example only, and with reference to the accompanying drawing, wherein :
- The Figures 1 , 2 , 3 , 4 , 5 and 6 are sections views taken along the transverse plane of the shaped pieces which are preferably formed from aluminum, through known extrusion process, and suited to be joined together to create the furniture elements;
- the Figures 7 and 8 are perspective views of some illustrative embodiments of furniture elements made of the shaped pieces illustrated in the previous Figures;
- the Figures 9 , 9a, 9b, 9c e 9b show perspective views of upright legs (Fig. 9) for furniture elements according to a first embodiment of the present invention, Figure 9a shows en enlarged view illustrating details of the shaped pieces used to form the said upright legs, the Figures 9b and 9c show in greater details the upper and lower closing elements and the Figure 9d illustrates in greater detail a possible embodiment which mounts a wheel assembly to permit movement thereof;
- the Figures 10 , 10a e 10b are perspective views of the horizontal element which connects the upright legs, and more in particular, the Figure 10 is an exploded perspective view of the components constituting the horizontal element, the Figure 10a is a perspective view of the obtained horizontal element and the Figure 10b is an enlarged and detailed view of the joint between the two elements which are establishing the horizontal connection between the upright legs, respectively;
- the Figures 11 and 11a are an illustrative perspective view of the joint between the upright elements and the horizontal connecting elements, while the Figure 11a is an enlarged view of the " junction " between the three elements, that are the entire upright element together with side horizontal elements which are joining the various upright elements, respectively;
- the Figure 12 is a perspective view of a particular projecting embodiment referring to a wall-attachment of a furniture element obtained by the assemblable elements and in which the front element of the upright leg is not mounted;
- the Figure 12a is a view, on an enlarged scale, of the joint between the projecting element and the two horizontal connecting elements;
- the Figure 13 is a perspective view of the wall-attached element which is obtained according to the solution illustrated in the Figures 12 and 12a;
- the Figure 13a is a perspective view , on an enlarged scale, of the element hung on a bracket attached to a wall;
- the Figure 14 shows an exploded perspective view of an attachment solution for securing the shaped pieces of the Fig.s 1 and 3 to a wall;

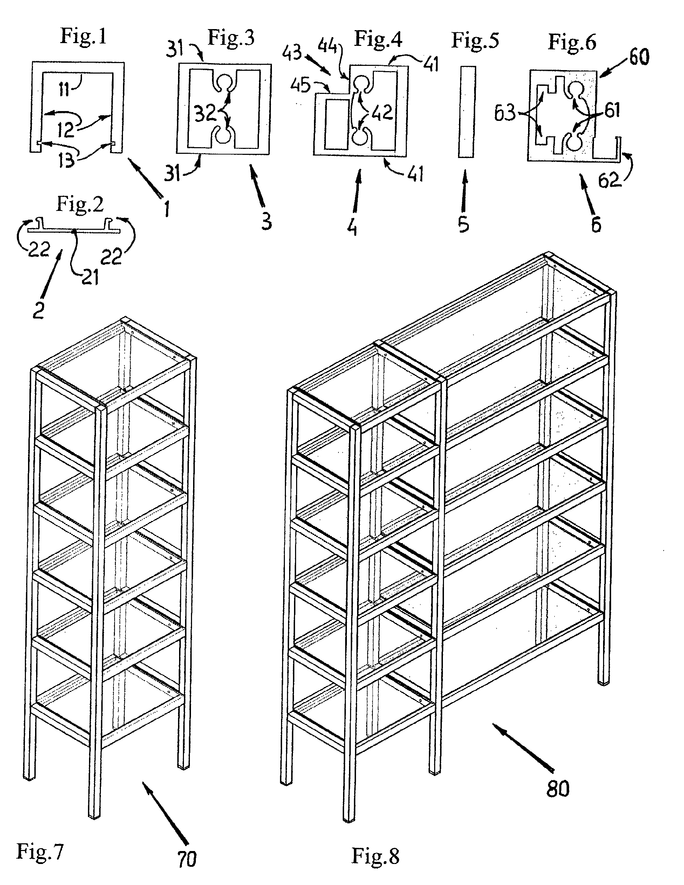

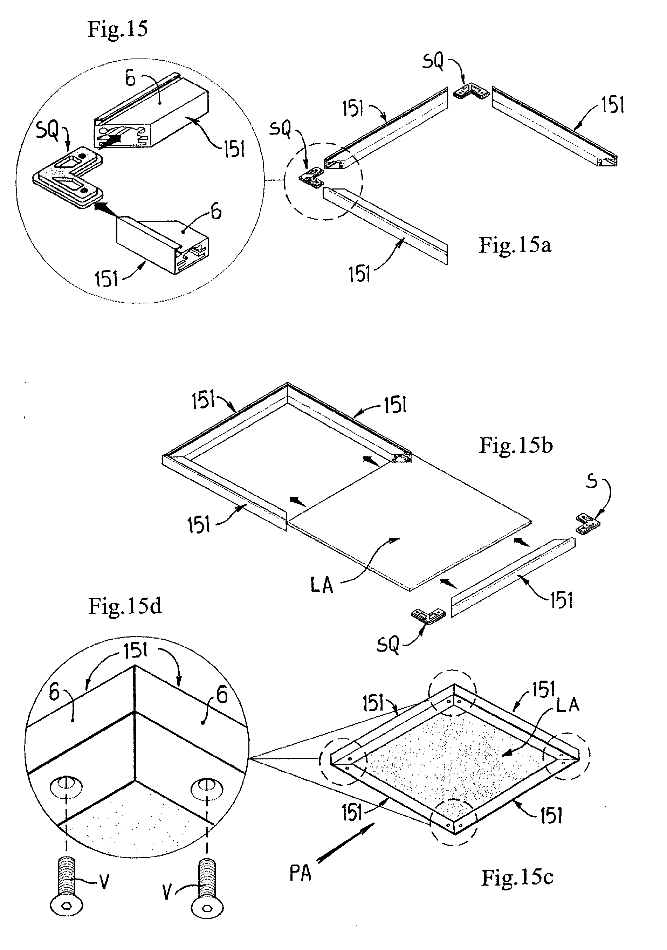

- the Figures 15, 15a e 15b are perspective views from above of the elements used to form a panelling surface which is possibly attachable, for example, to the elements in the Figures 7, 8 and 12; more particularly, the Figure 15 is an enlarged view of the connected means from which the above mentioned panelling surface is formed as can be seen in the Figures 15a and 15b where the panelling surface is viewed from below to above for clarity reasons; the entire panelling surface may be seen in the Figure 15c as well as in the Figure 15d showing, in greater detail, the various components which are assembled by means of screws;
- the Figure 16 is a perspective view of a possible solution for the attachment of the panelling surfaces according to the Figures 15 , 15a, 15b, 15c and 15d to the upright legs according to Figure 9;
- the Figure 16a is an enlarged view of the assembly established between the panelling element and the elements of said upright legs;
- the Figure 17 is a perspective view of a possible solution comprising horizontal connecting elements having different dimensions;
- the Figure 17a is an example of covering panels attachment for making the shelves of the furniture elements.

It is to be noted that like parts have been identified with like reference numerals.

Initially, the particular shape of the single pieces, which are used to form the furniture elements, will be described in more detail below.

The Figure 1 shows a first piece 1 that is generally " C " shaped and it has three sides which are substantially equal in length. The side 11 forming the " back " of the " C " is slightly longer than the two parallel sides 12 which are orthogonally protruding from the ends of the side 11.

On the inside of the parallel sides 12 as well as near their free ends are made longitudinally extending slight notches for a purpose which will hereinafter be described. As illustrated in Figure 2, a second shaped piece 2 is constituted by a flat body 21.

A pair of locking elements 22 are protruding from the lateral ends of the flat body 21 and are suited to slidably engage the longitudinally extending slight notches 13 of the said first shaped piece 1.

The connection between the first 1 and the second 2 shaped pieces produces a substantially square cross-section.

Referring to Figure 3 , it may be seen that the third shaped piece is substantially of square cross-section.

Elements 32 are centrally protruding from the inner sides of two opposite walls 31 of the said third piece 3. It is to be noted that the said opposite walls 31 will occupy a horizontal assembly position.

As it is already known in the art, such elements 32 are shaped to engage screws as hereinafter described.

As shown in the Figure 4, a fourth piece 4 is generally " L " shaped and it takes up the outer dimensions of the previous pieces 1 and 3 of the Figures 1 and 3.

In fact, the said " L " fourth piece 4 is to be brought back to a square piece from which a suitable corner portion of square cross-section has been removed in order to form a groove 43 which is defining two surfaces 44 and 45.

Moreover, fourth piece 4 also includes , as the piece of Figure3, axially aligned elements 42 which are protruding from the inner sides of two opposite walls 41.

It is to be noted that a wall 41 is smaller than the opposite wall 41 and both walls 41 will occupy a horizontal assembly position as the walls 31 of the piece 3.

Also such elements 42, well known in this art and completely equal to the elements 32 of the Figure 3 , are shaped to engage suitable screws as hereinafter described.

The Figure 5 shows a fifth piece 5 having a rectangular cross-section and formed by an extruded " flat body".

In the shaped piece 6 illustrated in the Figure 6 , a part 60 presents a substantially rectangular cross-section and it comprises an " L " shaped element 62 which departs orthogonally and outwardly from an end of a long side of the said rectangular cross-section thus forming a " C " shaped portion therewith.

Such piece of the Figure 6 has two shaped inner elements 61 in its portion adjacent to the " L " shaped element. The elements 61 are completely equal to the elements designated by the reference numerals 32 and 42 in the pieces 3 and 4 and can be used, if desired or needed, to engage suitable screws.

Two opposite female elements 63 are formed near the elements 61 and are adapted to couple , as hereinafter described, with corresponding male elements which are constituted by the arms of suitable brackets SQ of known type in the art.

Referring now to Figures 7 to 17, there are illustrated some possible embodiments which are obtained by means of the above described shaped pieces.

The Figures 7 and 8 show two possible embodiments 70 and 80 of frameworks which form furniture elements of the type supported on a floor and obtained by means of the above described shaped pieces.

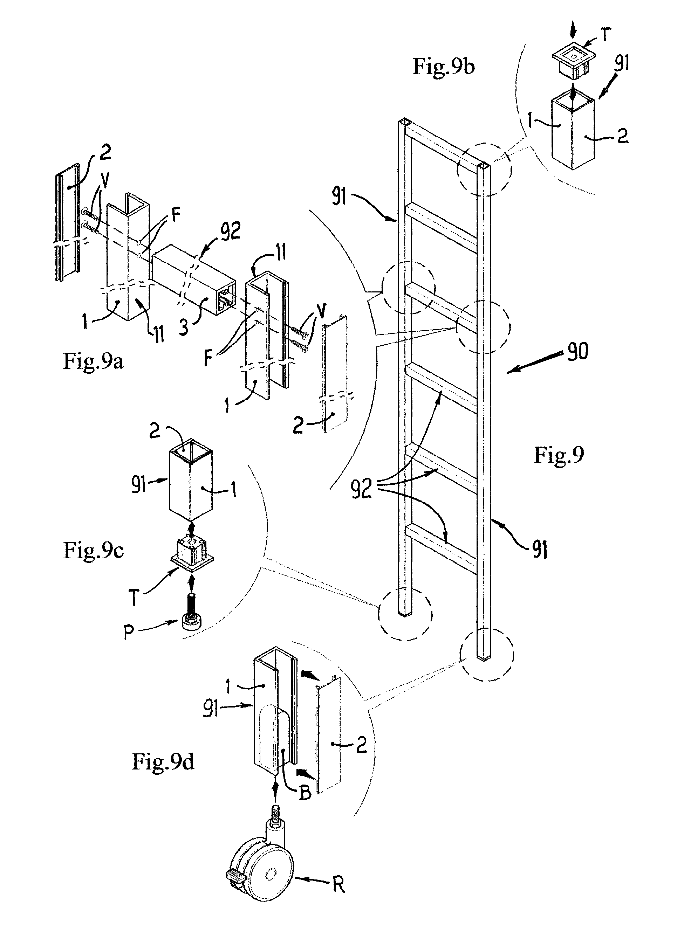

The Figure 9 is a perspective view of a possible upright leg 90 which is substantially formed by structure of a " ladder " type.

Figure 9a is an enlarged view of the Figure 9 to emphasize the shaped pieces that make up the upright legs 90 and their assembly procedures.

More precisely, there are shown lengths of the shaped pieces 1 , 2 and 3 of the respective Figures 1 , 2 and 3 which are suitably assembled by means of suited screws V.

Specifically, two lengths of the shaped piece 1 are used to form upright elements 91 and are bored with pairs of holes F drilled on their side 11 at a suitable distance from each other.

Next, the lengths of the shaped pieces 1 are placed back-to-back in opposite positions and the free ends of the " C " formed by them are outwardly extended.

Next, suitable lengths 92 of the third shaped piece 3 are inserted between the shaped pieces 1 forming the vertical elements 91, as above described, and then the axes of the pairs of holes F of the vertical element 91 will be coincident with the central elements 32 of the length 92 formed by the third shaped piece 3.

Thus, such lengths 92 may be solidly assembled by means of the screws V to costitute a finished upright leg 90.

Finally, the longitudinally open ends of the lengths of shaped pieces 1 forming the upright leg 90 will be closed by inserting corresponding lengths of shaped pieces 2 and by sliding the locking elements 22 of the flat body 21 until they completely engage the notches 31 of the said first shaped piece 1.

Clearly, the lengths of the first shaped piece 1 and of the second shaped piece 2 have equal length.

The Figures 9b and 9c show, in greater detail, how to close the ends of the vertical elements 91 in the finished upright leg 90.

In particular, the upper square openings realized by the shaped pieces 1 and 2 are closed by means of correspondingly dimensioned plugs T . In the lower portion of the vertical element 91 it will be possible to insert plugs T having either an height adjustable foot P or a block B which is mounted on the inside of the vertical element 91 and adapted to receive the threaded stem of a caster R of known type.

Having so described the operations for assembling the upright leg 90 illustrated in the Figures 7 and 8, it will now be described the assembling procedure of the horizontal elements 100.

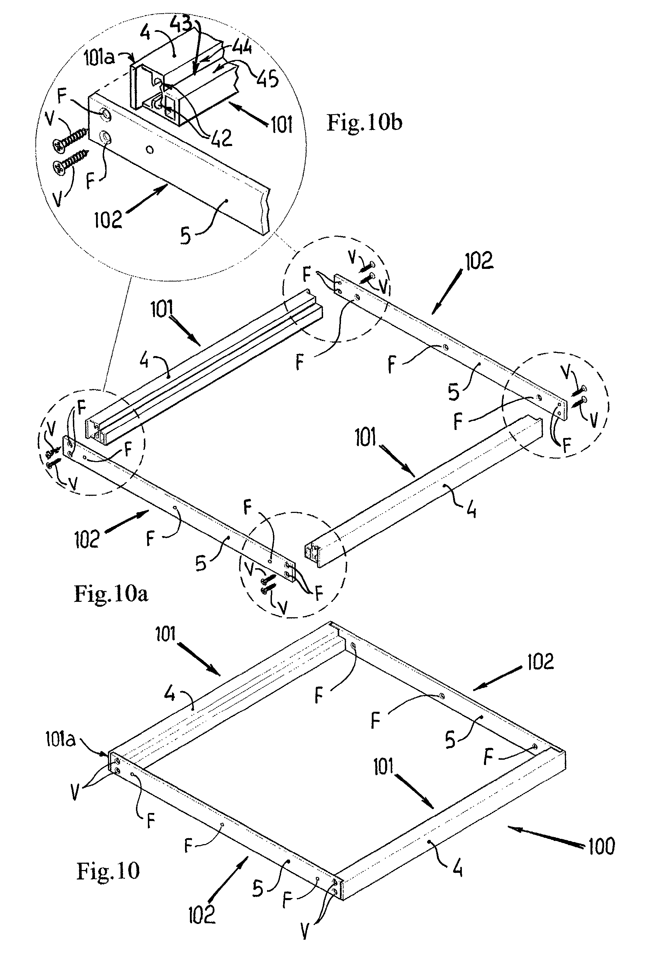

As can be seen in the comprehensive perspective view of the Figure 10, such elements are substantially formed by two lengths of piece 101, each made out of the fourth shaped piece 4 of the Figure 4, and by two others lengths of piece 102, each made out of fifth shaped piece 5 " flat body " of the Figure 5.

In particular, the shaped piece 101 is formed not only by a simple transversal cutting of the fourth shaped piece, but also by making on each its ends a little length 101a which has a thickness equal to that of the opposite wall, a width equal to the thickness of the fifth " flat body " shaped piece 5 and which protrudes for a distance that corresponds to the thickness of the above mentioned fifth " flat body " shaped piece 5.

The " flat body " forming the said fifth shaped pieces 5 is cut in a length that is equal to the width of the upright leg 90 reduced of two times the thickness of the said protruding little length 101a thus forming a respective length 102.

On each end of the formed length 102 are suitably formed a pair of countersunk holes F which are adapted to receive screws V, as described in greater detail hereinafter. Each pair of holes F presents a distance between the centers of two adjacent holes which is equal to the distance between the elements 42 of the fourth shaped piece 4.

When the above described operations are completed, the heads of the lengths 102 are positioned proximate to the bored heads of the lengths 101 and the flared holes F are brought in a position coincident with the cavities 42 as illustrated in the exploded Figure 10a.

The screws V are then screwed into the holes, as clearly illustrated in the Figure 10b, so as to obtain the horizontal element 100 of Figure 10.

The width of the element 100 is equal to the width of the upright leg 90 and corresponds to the depth of the completely assembled furniture element.

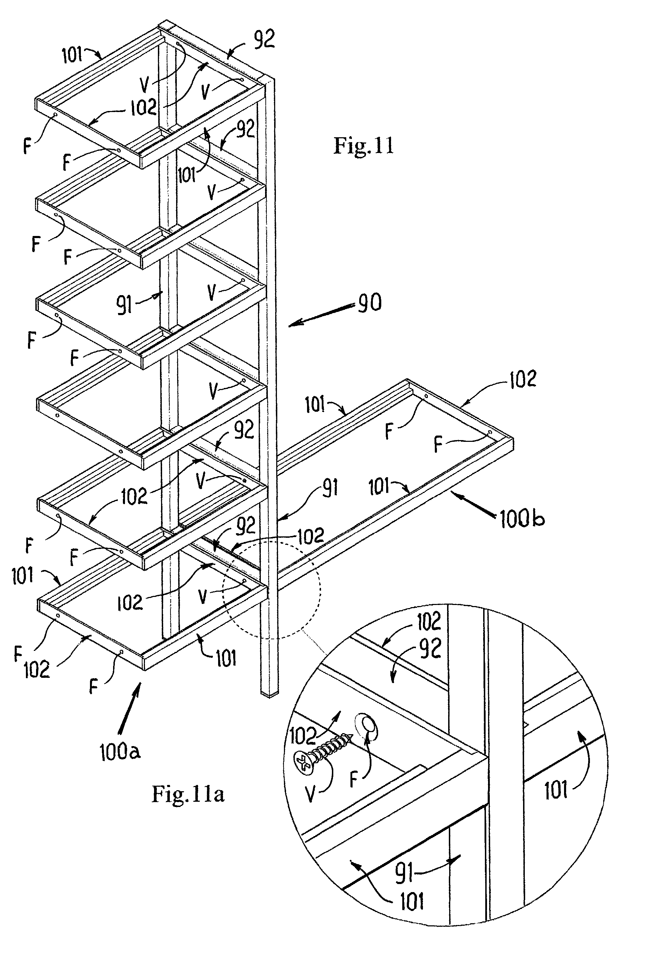

Figure 11 clearly illustrates a first example of how to establish the assembly between the upright legs 90 of Figure9 and the horizontal elements 100 of Fig. 10.

Such Figure 11 depicts the assemblies of two different horizontal elements 100a and 100b.

The left element 100a has a square cross-section while the right element 100b presents a rectangular cross-section.

The Figure 11a is an enlarged view of the " junction " between the three basic elements of the furniture element, that are the horizontal elements 100 which are joined , at their sides, to the upright leg 90.

In particular, with the upright legs 90 and the horizontal elements completely formed, the next step in the assembly operation is to drill at least a pair of suitably positioned holes F through the transversal lengths 92 of the upright leg 90.

Then, holes F are drilled trough the elements 102 and are spaced a distance that correspond to the distance between the holes F through the transversal element 92.

The holes F of the transversal element 92 mate the holes F of the element 102 and then the horizontal elements 100 can be fixedly connected with the upright elements by means of screws V.

Such assembly operation will be executed repeatedly to connect all the desired transversal elements 92 by means of horizontal elements 100 .

It is obvious that the transversal elements 92 of the upright legs 90 at the heads of the finished furniture 70 or 80 (see the Figures 7 and 8) will be bored only through their inner sides, while the inner upright legs 90 of the same furniture element will be bored on both sides.

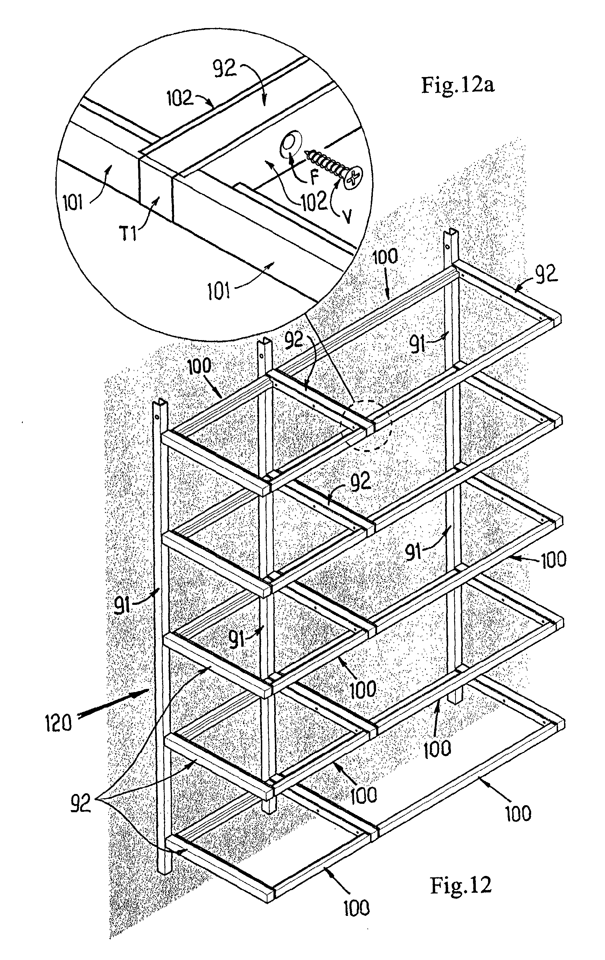

The Figure 12 is a perspective view showing another possible embodiment of a frame structure for a wall-attachment of a furniture element 120 obtained by the assembly elements of the Figures 1, 3, 4, 5 and 6.

It is to be pointed out that such structure does not comprise the vertical front elements which are designated upright legs 90 in the solutions 70 and 80.

Such solution 120 is further illustrated in the Figures 12a, 13, 13a and 14.

The embodiment 120 utilizes always a suitable length 91 of a first shaped piece 1 which substantially corresponds to the vertical element 91 of the previously described embodiment.

The vertical length 91 is provided with the same pair of suitably spaced holes F and the length 92 is obtained by the third shaped piece 3 with the same dimensions of the length used in the embodiments 70 and 80.

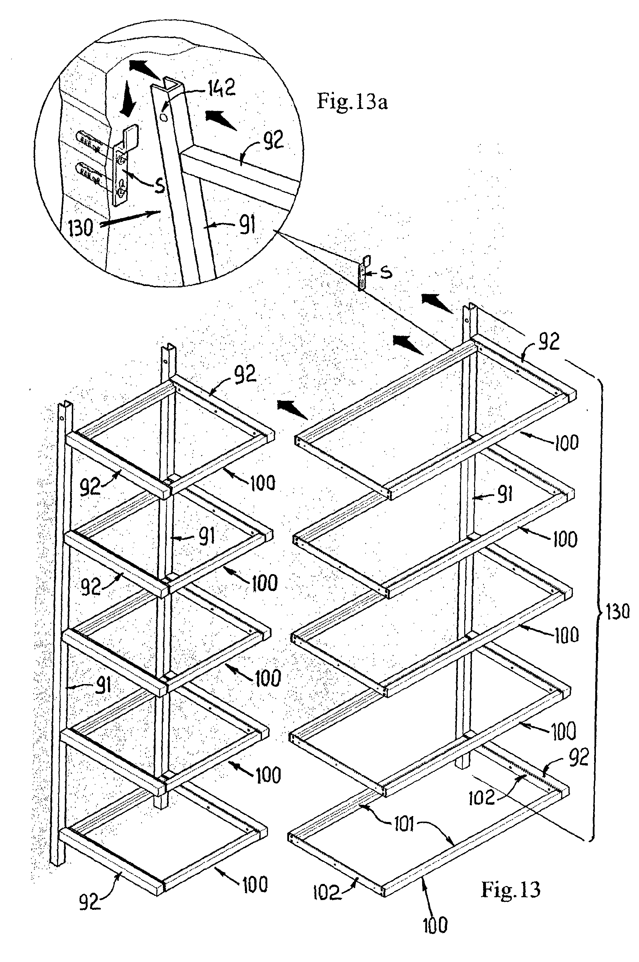

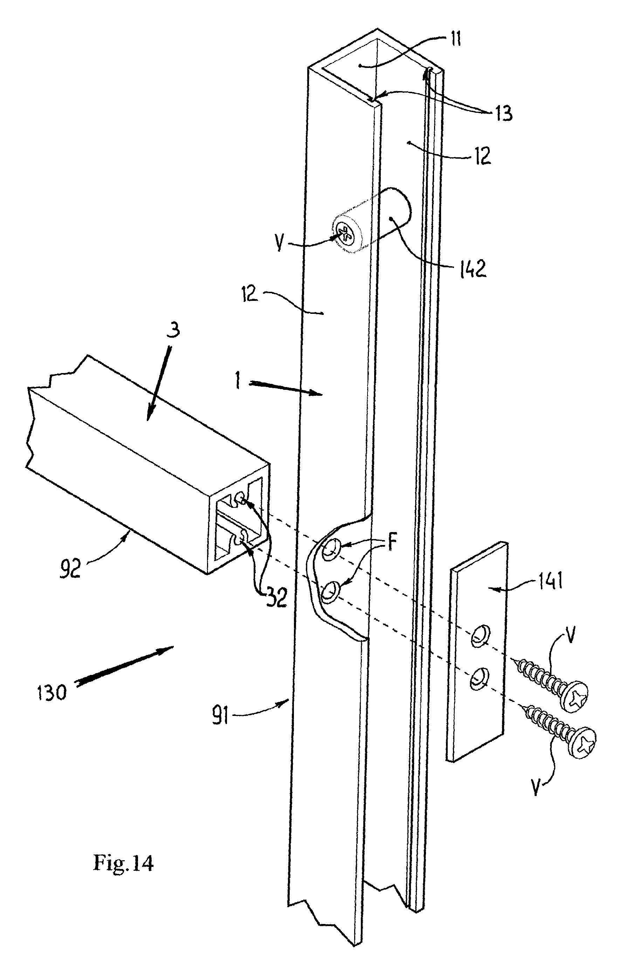

Then the length 91 is fixedly connected with the length 92, by means of screws V and of a plate 141 interposed between the screws V and the length 91 as illustrated in the Figure 14, to form a " comblike " structure 130 to which the horizontal elements 100 are secured as illustrated in the Figure 13.

With such comb structure 130 completely formed, the next step in the assembly operation is to mount the comb structure to the wall, as illustrated in the Figures 13 and 13a, by hooking its hollow cylindrical element 142 which is clearly illustrated in the Figure 14.

Such cylindrical element 142 will be inserted in the upper end of a respective length 91 made of the said first shaped piece 1 through horizontal holes drilled through the walls 12 of the length 91 of the first shaped piece 1.

Next, the cylindrical element 142 is interposed between the said holes, it is positioned along the drilling axis defined on the walls 12 and finally, it is removably fixed by means of screws V.

Such cylindrical element 142 will engage, as illustrated in the Figures 13 and 13a, a suitable hanger plate S which is attached to the wall by means of fasteners such as screws or the like.

It is obvious that the projecting shaped pieces 92 have the same holes made through the elements 92 of the embodiments 70 and 80 of the Figures 7 and 8 and shown in the Figures 11 and 11a.

Moreover, also the horizontal elements 100 have corresponding flared holes in such a way that the elements (92-100) can be solidly connected to each other as previously described in the embodiments 70 and 80 of the Figures 7 and 8.

For a reason that should be obvious, the elements 92 are slightly longer than the length of the elements 92 of the embodiments 70 and 80 because they lack the front element 91 constituting the front upright leg.

The front openings of the lengths 92 in the combs 130 can be closed by means of flat plugs T1 which are not shown because they are similar to the well known plugs T used for closing the upper openings of the lengths 91 as illustrated in the Figure 9b.

After the description of two possible embodiments of the shaped pieces forming the object of the present invention, it is now described, with reference to the perspective views in the Figures 15 , 15a, 15b , 15c e 15d, a possible embodiment for paneled surfaces which are made by means of the shaped piece of Figure 6.

In particular, the Figure 15 illustrates how a shaped piece 6 is suitably cut into pieces of desired length by means of cuts which are inclined at an angle of 45° in order to form a length 151 and how the pieces 151 are joined together in a head-by-head relationship by means of a well known and suitably shaped bracket SQ which is visible in the Figures 15, 15a and 15b and not further described.

As particularly shown in the perspective view of Figure 15a, the first step in the joint operation is the union of three lengths 151 by means of two brackets SQ thus forming a first " C " shaped structure.

As shown in the Figure 15b, such " C " shaped structure is closed by means of a fourth length 151 and of two additional brackets SQ by previous insertion of a generical plate LA which closes the central portion of the structure and forms a continuous level surface.

The Figure 15c and 15d illustrate, seen from below, the entire panelling surface PA and the enlarged detail of a comer portion in the panel PA assembled by means of screws, respectively.

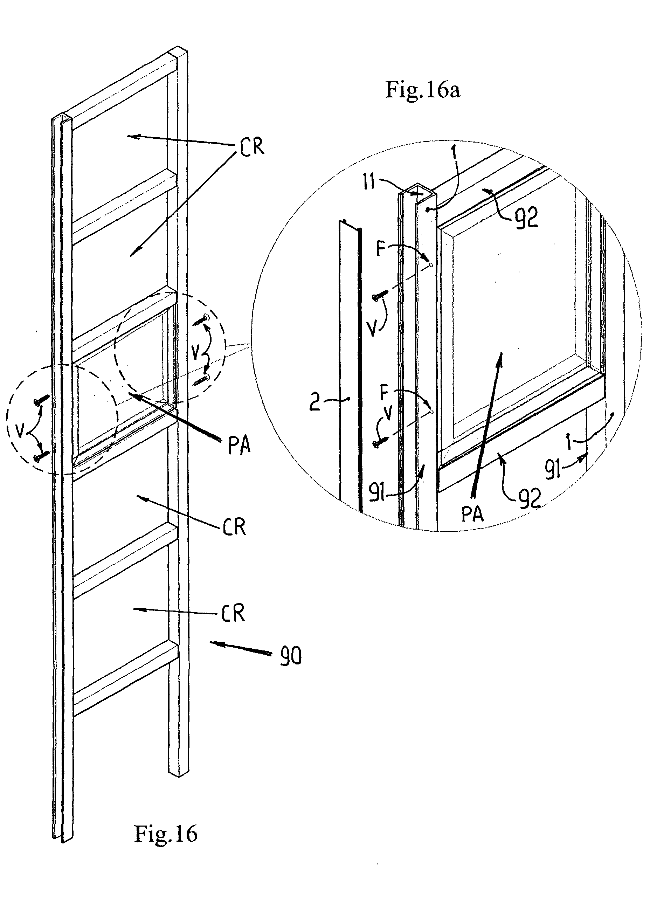

Referring to Figures 16 and 16a, a possible use of the panel PA described in the Figures 15 , 15a , 15b , 15c and 15d is shown.

Te Figure 16 is a perspective view of an exemplary embodiment of a panelling surface according to the Figures 15, 15a, 15b, 15c and 15d , while the Figure 16a is an enlarged view of the fixing of the panel PA, by means of screws which are extending through the upright leg 90 already described in the Figure9, in order to close the rectangular openings of the embodiments 70, 80 and 120.

The backside 11 of the length 91, made of the first shaped piece 1, is provided with suitably spaced holes F which are resulting placed on the inside of the rectangular cells CR of the said upright 90.

Covering panels PA, the vertical sides of which can be provided with holes corresponding to the holes F of the backside 11, can be inserted in the cells CR.

Then the assembly is solidly fixed by means of screws V and by closing the element 91 with a suitable length of the second shaped piece 2.

After the above described embodiments of the structures 70, 80 and 120 together with some possible accessories, as for example the panels PA, it is now described the assembly procedure to form the top surfaces and the shelves illustrated in the Figures 17 and 17a.

In fact, the Figure 17 illustrates how slabs LA can be easily and quickly mounted in possible embodiment, in this case the embodiment 80 of Figure 8.

First, slabs LA are previously cut according to the dimensions of the inner space of the horizontal element 100.

More precisely, the length of the slabs will be defined by the lengths 102, their width (depth) will be defined by the distance between the walls 44 of two lengths 101 and their tickness will be equal to the height of the wall 44.

The walls 45 will be the support for the said slab.

After the dimensions of the slabs LA have been defined, as described above, the slabs are brought above the horizontal elements 100 and then placed in and supported by the said walls 45 of the lengths 101 of the said horizontal elements 100. It is well understood that modifications and variations may be made to the shaped pieces and to the lengths obtained by such shaped pieces as well as to their assembling procedure without departing however from the scope defined by the following claims with reference to the accompanying drawings and thence from the protection extent of the present industrial invention.

## Claims

1. Shaped pieces preferably of metallic type as well as different shape which may be variously assembled into various kinds of furniture elements, said shaped pieces ( 1, 2, 3, 4, 5 and 6 ) being characterized to be all derived from a basic shape of square cross section, therefore all the shaped pieces present at least an equal dimension and they are constituted by a limited number of different shapes, with various pieces of suitable lengths, made of said lengths (1, 2, 3, 4, 5 and 6 ), variously connected to each other to form various solutions ( 70 - 80 - 120 ) of framework structures having various shapes and dimensions, such as framework structures forming furniture elements to be supported on a floor or framework structures forming furniture elements to be attached to a wall.

2. Shaped pieces according to the claim 1 , **characterized in that** all said shaped pieces ( 1 , 2, 3, 4, 5 and 6 ) derive from a square cross-sectional shape, therefore all the shaped pieces present at least a constant dimension, more precisely , a first shaped piece ( 1 ) which substantially produces a " C " shaped structure deriving from a corresponding square structure which has been deprived of a side, so the said first shaped piece ( 1 ) being formed by a first side (11) from the ends of which are orthogonally departing two parallel sides ( 12 ) extending in the same direction, a second shaped piece ( 2) being constituted by a flat body ( 21 ) having a width equal to the widths of the three sides ( 11-12 ) of the said shaped piece (1) to which the flat body can be attached by slidingly inserting suitable locking elements ( 22 ), which are protruding from its ends, in longitudinally extending slight notches ( 13 ) which are obtained in the free ends of the parallel sides ( 12 ) of the same first shaped piece (1), the attachment established between the shaped pieces ( 1 ) and ( 2 ) forms a unitary element ( 1 - 2 ) which substantially constitutes a square cross-sectional shaped piece, a third shaped piece ( 3 ) being constituted by an element with a square shape which is dimensionally equal to the square shape of the unitary element ( 1 - 2 ) obtained by the assembly between the first (1) and the second ( 2 ) shaped piece, respective elements ( 32 ) are centrally made on the inner surfaces of two opposite walls ( 31) to form , in a known way, coaxial holes adapted to engage corresponding screws ( V) , the fourth shaped piece ( 4 ) reproduces substantially the third shaped piece ( 3 ) from which is removed a suitable corner portion ( 43 ) of square cross-section which penetrates into the section as far as one of the shaped elements ( 42 ) equivalent to the shaped elements ( 32 ) of the third shaped piece ( 3 ), also the sixth shaped piece ( 6 ) reproduces substantially the third shaped piece ( 3 ) of wich maintains , as the previous shaped piece ( 4 ), a substantially rectangular portion , the smaller sides of which are extending as far as the outer portions of the shaped elements ( 61 ) which are completely equal to the elements ( 32-42 ) of the third ( 3 ) and fourth shaped piece ( 4 ), from an end of one of said smaller sides is departing an " L " shaped and inwardly facing element ( 62) which forms a " C " shaped portion together with the adjacent long side of the said rectangular portion, the inner space of the said substantially rectangular portion is suitably shaped to form two female elements which are adapted to couple with corresponding male elements which are formed by the arms of a bracket ( SQ ).

3. Shaped pieces according to the preceding claims , **characterized in that** whether in the solutions ( 70 - 80 ), forming furniture elements supported on the floor, or in the solutions ( 130 ), forming furniture elements to be attached to a wall, suitable groups for vertical support will be formed solely by use of three types ( 1 - 2 - 3 ) of such shaped pieces respectively forming a " ladder " type structures, such as upright legs ( 90 ), " comblike " structures ( 130 ) ; in the case of vertical supporting groups for structures supported on the floor according the solutions ( 70 - 80 ), suitable upright legs ( 90 ) will be formed by the use of two lengths ( 91 ) of shaped piece (1) which have equal length and are arranged in a mutually parallel and opposite relationship with their open portions facing outwardly, a suitable number of lengths ( 92 ), having equal length, will be interposed between the pieces ( 1 ) and orthogonally fixed to their inner walls ( 11 ) by means of pairs of screws ( V ), extending through pairs of holes ( F ) placed on the same walls (11) at a distance which is equal to the distance between the pairs of holes in the shaped elements ( 32 ) of the lengths ( 92 ), the screws will engage these shaped elements ( 32 ) to ensure the mutual engagement and the formation of a " ladder " type structure, in the case of vertical supporting groups for structures (130) which are attachable to a wall, " comblike " structures ( 120 ) will be formed in a way that is completely equal to the previous structures ( 90 ) except for comprising only one length ( 91 ), so that the elements formed by the lengths ( 92 ) will be completed by the attachment of corresponding lengths of shaped piece ( 2 ) in order to obtain a final square shape, suitable plugs ( T ) will be inserted, for aesthetic reasons, on the upper and lower ends of each lengths ( 91 ) used in the floor-supported embodiments ( 70 - 80) as well as on the free ends of the horizontal lengths ( 92 ) used in the wall-attached embodiments ( 120 ), such plugs being provided with foots ( P ) which are adjustable by screwing or with suitable blocks ( B ) which are adapted to receive the threaded stem of a caster ( R ) of known type.

4. Shaped pieces according to the preceding claims , **characterized in that** by means of two further shaped pieces ( 4- 5 ) can be formed suitable horizontal elements ( 100 ) which are constituted by rectangular framework structures having two opposite sides which are fixed to respective lengths ( 92 ) of the structures forming the supporting groups in the floor-supported embodiments ( 70 - 80 ) or wall-attached embodiments ( 120 ) in order to mutually connect them, the said horizontal elements ( 100 ) being constituted by a first pair of lengths (101) made of the said fourth shaped piece ( 4 ) and by a second pair of lengths ( 102 ) made of the said fifth shaped piece ( 5 ) , the ends of the lengths ( 102 ) of the second pair being provided with pairs of flared holes ( F ) which are axially coincident with the shaped elements (61) of the lengths (101) made of shaped piece ( 4 ), the fixing of a corner portion of the horizontal element ( 100 ) is performed by inserting suitable screws ( V ) in the said holes ( F ) and by screwing them through the shaped elements (61) formed in a corresponding end of a respective length (101), the horizontal element ( 100 ) is completed by repeatedly performing the fixing operation in its other three corners.

5. Shaped pieces according to the preceding claims , **characterized in that** the lengths ( 102 ), which are made of the fifth shaped piece ( 5 ) to form the horizontal elements ( 100 ), constitute the opposite sides of the rectangular framework structures which are fixed, by means of suitable screws ( V ), to respective sides of the lengths ( 92 ) of suitable vertical supporting groups thus forming respective framework solutions ( 70 - 80 -120) which are usable to form corresponding furniture elements, suitable slabs ( LA ) will be inserted in the space delimited by the lengths ( 101 ) made of shaped piece ( 4 ) and connected to the lengths ( 102 ) of shaped piece ( 5 ), such slabs ( LA ) being formed by rectangular elements having lateral dimensions which are equal to the dimensions defined by the inner surfaces of the lateral lengths ( 102 ) and the opposite surfaces ( 44 ) of the grooves ( 43) formed on the longitudinal lengths (101), such slabs ( LA ), which can be formed of various materials, can be supported by the surfaces ( 45 ) of the said grooves ( 43 ) in the respective element ( 100 ).

6. Shaped pieces according to the preceding claims , **characterized in that**, the shaped piece ( 6 ) , permits the creation of panels (PA) suited to form suitable paneled surfaces for various rectangular cells ( CR ) as those resulting on the said uprights legs ( 90), said panels ( PA) will be formed in a known way by forming suitable lengths (151) from a respective sixth shaped piece ( 6 ) , such lengths (151) being obtained by means of cuts which are inclined at an angle of 45° and which are penetrating in mutually convergent directions from the side of their rectagular body from which is departing the " L " shaped lip forming the corresponding element ( 62 ), then, suitable brackets ( SQ ) are suitably applied to the complementary ends of two suitable pairs of so obtained lengths (151), a plate ( LA ) made of suitable material will be perimetrically inserted, during the assembly operation of the said lengths (151), in the perimetrical cavity produced by the said elements ( 62 ) of the respective lengths( 151 ), when the assembly is completed the ends of the single lengths ( 151 ) are fixed, by means of suitable screws ( V ), to the arms of the brackets (SQ) which are therein inserted, the panel ( PA) so created can be inserted in a respective rectangular cell ( CR ) wherein it can be suitably fixed to respective perimetrical lengths of the same cell by means of suitable screws ( V ), so obtaining real fixed paneled walls, or the panel ( PA ) can be fixed, by means of known hinges, to vertical or horizontal perimetrical lengths so forming doors which are revolving on a vertical or on a horizontal axis.
